# EUROPEAN PATENT APPLICATION

(11) **EP 4 776 256 A1**
(43) Date of publication of application: **15.07.2026**
(21) Application number: 24820527.0
(22) Date of filing: 12.11.2024
(51) Int. Cl.: G08B 13/196

(54) **MONITORING METHOD BASED ON AI GIMBAL-MOUNTED SEARCHLIGHT, AND RELATED DEVICE**

(71) Applicant: Shenzhen 360 Smart Life Technology Co., Ltd., Shenzhen, Guangdong 518000 (CN)
(72) Inventor: LI, Zongqing, Shenzhen, Guangdong 518000 (CN)
(74) Representative: Osterhoff, Utz
(86) International application number: PCT/CN2024/131571
(87) International publication number: WO 2026/102571

(57) **Abstract**

Disclosed are a monitoring method and a device based on an Al pan-tilt-zoom (PTZ) searchlight, relating to the technical field of computer vision. The method includes: obtaining a video image within a preset monitoring range in real-time; detecting whether a target object presented in the video image is a risk target; and in response to that the target object is the risk target, controlling a searchlight to irradiate the target object and generate an alarm sound until the target object is not detected. The camera device of the present application controls the searchlight to irradiate the target object and generate an alarm sound to achieve alert and drive away the risk target, thereby improving the safety precaution effect of the camera and thus improving the user's experience.

## Description

### TECHNICAL FIELD

The present application relates to the technical field of computer vision, and in particular to a monitoring method and a device based on an AI pan-tilt-zoom (PTZ) searchlight.

### BACKGROUND

At present, with the development of society and the advancement of science and technology, monitoring cameras have become an important part of home and commercial security, which are not only used in the fields of business and public security, but also widely used in personal residences to enhance home safety. Specifically, monitoring cameras installed at home are mainly for anti-theft, fire prevention, monitoring the safety of children and the elderly, etc.

In related art, real-time images within the monitoring range are sent to the user side by the camera so that the user can view the monitoring image in real time. However, this method has a poor effect in preventing strangers from intruding, that is, the safety precaution of the camera is poor, which leads to a poor experience for users.

The above content is only used to assist in understanding the technical solution of the present application, and does not mean that the above content is recognized as prior art.

### SUMMARY

The main purpose of the present application is to provide a monitoring method based on the AI pan-tilt-zoom (PTZ) searchlight, aiming to solve the technical problem that the safety precaution of the camera is poor, resulting in poor experience for users.

To achieve the above purpose, the present application provides a monitoring method based on the AI PTZ searchlight, including:
obtaining a video image within a preset monitoring range in real-time;
detecting whether a target object presented in the video image is a risk target; and
in response to that the target object is the risk target, controlling a searchlight to irradiate the target object and generate an alarm sound until the target object is not detected.

In an embodiment, the step of controlling the searchlight to irradiate the target object and generate the alarm sound until the target object is not detected includes:
acquiring a dynamic motion trajectory of the target object; and
controlling the searchlight to irradiate the target object based on the dynamic motion trajectory while continuously generating the alarm sound, until the target object is not detected.

In an embodiment, the step of acquiring the dynamic motion trajectory of the target object includes:
converting the video image into a plurality of image frames;
detecting a feature data through a preset target tracking model based on the plurality of image frames to obtain a 3D detection box of the target object;
tracking the target object based on the 3D detection box to obtain a target tracking result, and predicting a position of the target object based on the target tracking result to obtain a prediction result; and
generating the dynamic motion trajectory of the target object based on the target tracking result and the prediction result.

In an embodiment, the step of in response to that the target object is the risk target, controlling the searchlight to irradiate the target object and generating the alarm sound until the target object is not detected includes:
in response to that the target object is the risk target, determining a first color temperature information; and
controlling the searchlight to irradiate the target object corresponding to the first color temperature information while generating the alarm sound, until the target object is not detected.

In an embodiment, after the step of in response to that the target object is the risk target, controlling the searchlight to irradiate the target object and generate the alarm sound until the target object is not detected, the method includes:
in response to that the target object is not the risk target, determining a second color temperature information; and
turning on a lighting lamp to generate illumination corresponding to the second color temperature information, and controlling the searchlight to irradiate in a direction of a preset action range of the target object corresponding to the second color temperature information, rather than irradiating towards the target object.

In an embodiment, the step of controlling the searchlight to irradiate in the direction of the preset action range of the target object corresponding to the second color temperature information includes:
acquiring a dynamic motion trajectory of the target object; and
controlling the searchlight to irradiate in the direction of the preset action range of the target object corresponding to the second color temperature information based on the dynamic motion trajectory.

In an embodiment, the step of determining the second color temperature information includes:
converting the video image into a plurality of image frames and extracting environmental characteristics from the plurality of image frames; and
performing a color temperature adaptation analysis based on the environmental characteristics through a preset color temperature control model to obtain the second color temperature information, wherein the color temperature control model is obtained by training a preset to-be-trained model based on an environmental characteristics sample and a color temperature information tag of the environmental characteristics sample.

In an embodiment, before the step of converting the video image into the plurality of image frames and extracting environmental characteristics from the plurality of image frames, the method includes:
obtaining the environmental characteristics sample and the color temperature information tag of the environmental characteristics sample; and
performing iteration training on the preset to-be-trained model based on the environmental characteristics sample and the color temperature information tag to obtain the color temperature control model.

In an embodiment, the step of performing iteration training on the preset to-be-trained model based on the environmental characteristics sample and the color temperature information tag to obtain the color temperature control model includes:
determining a time information of the environmental characteristics sample;
determining a corresponding time weight based on the time information; and
performing iteration training on the preset to-be-trained model based on the environmental characteristics sample, the color temperature information tag and the time weight to obtain the color temperature control model.

In an embodiment, the step of performing iteration training on the preset to-be-trained model based on the environmental characteristics sample, the color temperature information tag and the time weight to obtain the color temperature control model includes:
performing the color temperature adaptation analysis through the preset to-be-trained model based on the environmental characteristics sample and the time weight, so as to obtain a color temperature output result;
calculating a difference between the color temperature output result and the color temperature information tag to obtain an error result;
determining whether the error result meets an error standard indicated by a preset error threshold range based on the error result; and
in response to that the error result does not meet the error standard indicated by the preset error threshold range, returning to the step of performing the color temperature adaptation analysis through the preset to-be-trained model based on the environmental characteristics sample and the time weight, so as to obtain the color temperature output result, and stopping training until the error result meets the error standard indicated by the preset error threshold range to obtain the color temperature control model.

In addition, in order to achieve the above purpose, the present application also provides a monitoring apparatus based on a pan-tilt-zoom (PTZ) searchlight, including:
an obtaining module configured to obtain a video image within a preset monitoring range in real-time;
a detecting module configured to determine whether a target object presented in the video image is a risk target; and
a controlling module configured to control a searchlight to irradiate the target object and generate an alarm sound in response to that the target object is the risk target, until the target object is not detected.

In an embodiment, the control module includes:
a first acquisition module configured to acquire a dynamic motion trajectory of the target object; and
an irradiating module configured to control the searchlight to irradiate the target object based on the dynamic motion trajectory while continuously generating the alarm sound, until the target object is not detected.

In an embodiment, the first acquisition module includes:
a first conversion module configured to convert the video image into a plurality of image frames;
a target detection module configured to determine a feature data based on the image frame through a preset target tracking model to obtain a 3D detection box of the target object;
a tracking module configured to track the target object based on the 3D detection box to obtain a target tracking result, and predicting a position of the target object based on the target tracking result to obtain a prediction result; and
a generation module configured to generate a dynamic motion trajectory of the target object based on the target tracking result and the prediction result.

In an embodiment, the control module further includes:
a determination module configured to determine a first color temperature information in response to that the target object is the risk target; and
a first irradiating module configured to control the searchlight to irradiate the target object corresponding to the first color temperature information while generating the alarm sound until the target object is not detected.

In an embodiment, the monitoring apparatus based on the AI PTZ searchlight further includes:
a color temperature determination module configured to determine a second color temperature information in response to that the target object is not the risk target; and
a searchlight control module configured to turn on a lighting lamp to generate illumination corresponding to the second color temperature information, and controlling the searchlight to irradiate in a direction of the preset action range of the target object corresponding to the second color temperature information, rather than irradiating towards the target object.

In an embodiment, the searchlight control module includes:
a second acquisition module configured to acquire the dynamic motion trajectory of the target object; and
a second irradiating module configured to control the searchlight to irradiate the target object in the direction of the preset action range based on the dynamic motion trajectory.

In an embodiment, the color temperature determination module includes:
an environmental characteristics extracting module configured to convert the video image into a plurality of image frames and extracting environmental characteristics from the plurality of image frames; and
an analysis module configured to perform a color temperature adaptation analysis based on the environmental characteristics through a preset color temperature control model to obtain the second color temperature information, wherein the color temperature control model is obtained by training a preset to-be-trained model based on an environmental characteristics sample and a color temperature information tag of the environmental characteristics sample.

In addition, in order to achieve the above purpose, the present application also provides a monitoring device based on the PTZ searchlight, including: a memory, a processor, and a computer program stored in the memory and executable on the processor, wherein the computer program is configured to implement steps of the monitoring method based on the AI PTZ searchlight.

In addition, in order to achieve the above purpose, the present application also provides a storage medium, the storage medium is a computer-readable storage medium, a computer program is stored on the storage medium, and the steps of the monitoring method based on the AI PTZ searchlight are implemented when the computer program is executed by the processor.

In addition, in order to achieve the above purpose, the present application also provides a computer program product, including a computer program, and steps of the monitoring method based on the AI PTZ searchlight are implemented when the computer program is executed by the processor.

One or more technical solutions provided in the present application have at least the following technical effects:
Compared with the related art, in which the real-time images within the monitoring range are usually sent to the user side by the camera so that the user can view the monitoring image in real time. However, this method has a poor effect in preventing stranger intrusion, that is, the safety precaution effect of the camera is low, which leads to a poor experience for the user. In comparison, the present application obtains a video image within a preset monitoring range in real time, detects whether the target object presented in the video image is a risk target, and in response to that the target object is the risk target, controls the searchlight to irradiate the target object and generate an alarm sound until the target object cannot be detected. It can be understood that in response to detecting a risk target within the monitoring range, the camera device of the present application controls the searchlight to irradiate the target object and generate an alarm sound to achieve alert and drive away the risk target, thereby improving the safety precaution effect of the camera and thus improving the user's experience.

### BRIEF DESCRIPTION OF THE DRAWINGS

The accompanying drawings herein are incorporated into and constitute a part of the specification, illustrate embodiments consistent with the present application, and together with the specification to explain the principles of the present application.

In order to illustrate the technical solutions in the embodiments of the present application or in the related art more clearly, the following briefly introduces the accompanying drawings required for the description of the embodiments or the related art. Obviously, for those skilled in the art, other drawings can also be obtained according to the structures shown in these drawings without any creative effort.
FIG. 1 is a flowchart of a monitoring method based on an AI pan-tilt-zoom (PTZ) searchlight according to an embodiment of the present application.
FIG. 2 is a schematic view of an application scenario of the monitoring method based on the AI PTZ searchlight in the present application.
FIG. 3 is a schematic view of a color temperature division of the monitoring method based on the AI PTZ searchlight in the present application.
FIG. 4 is a flowchart of the monitoring method based on the AI PTZ searchlight according to an embodiment of the present application.
FIG. 5 is a schematic structural view of a monitoring camera of the monitoring method based on the AI PTZ searchlight in the present application.
FIG. 6 is a flowchart of the monitoring method based on the AI PTZ searchlight according to an embodiment of the present application.
FIG. 7 is a schematic structural view of a module of an monitoring apparatus based on the AI PTZ searchlight according to an embodiment of the present application.
FIG. 8 is a schematic structural view of a device of a hardware operating environment involved in the monitoring method based on the AI PTZ searchlight according to an embodiment of the present application.

The realization of the objective, functional characteristics, and advantages of the present application are further described with reference to the embodiments and accompanying drawings.

### DETAILED DESCRIPTION OF THE EMBODIMENTS

It should be understood that the specific embodiments described herein are only used to explain the technical solutions of the present application and are not used to limit the present application.

In order to better understand the technical solutions of the present application, the following will be described in detail with reference to the drawings and specific methods of the specification.

The main solution of the present application is: obtaining a video image within a preset monitoring range in real-time; detecting whether the target object presented in the video image is a risk target; in response to that the target object is the risk target, controlling the searchlight to irradiate the target object and generate an alarm sound until the target object cannot be detected.

In this embodiment, the monitoring apparatus based on the pan-tilt-zoom (PTZ) searchlight is the execution subject. For the convenience of description, it is hereinafter referred to as "apparatus" for explanation.

In the related art, the real-time image within the monitoring range are usually sent to the user side by the camera so that the user can view the monitoring image in real-time. However, this method has a poor effect in preventing strangers from intruding, that is, the safety precaution effect of the camera is low, which leads to a poor experience for the user.

The present application provides a solution to achieve alert and drive away risk targets, thereby improving the safety precaution effect of the camera, and improving the user's experience.

From the above embodiments, it can be seen that the present application obtains a video image in a preset monitoring range in real-time, detects whether the target object presented in the video image is a risk target, and in response to that the target object is the risk target, controls the searchlight to irradiate the target object and generate an alarm sound until the target object cannot be detected. It can be understood that in response to detecting a risk target within the monitoring range, the camera device of the present application controls the searchlight to irradiate the target object and generate an alarm sound to achieve alert and drive away the risk target, thereby improving the safety precaution effect of the camera, and improving the user's experience.

It should be noted that the execution subject of this embodiment can be a computing service device with data processing, network communication and program running functions, such as a tablet computer, a personal computer, a mobile phone, etc., or an electronic device, a terminal apparatus, etc. that can realize the above functions. The following takes the monitoring apparatus based on the PTZ searchlight as an example to illustrate this embodiment and the following embodiments.

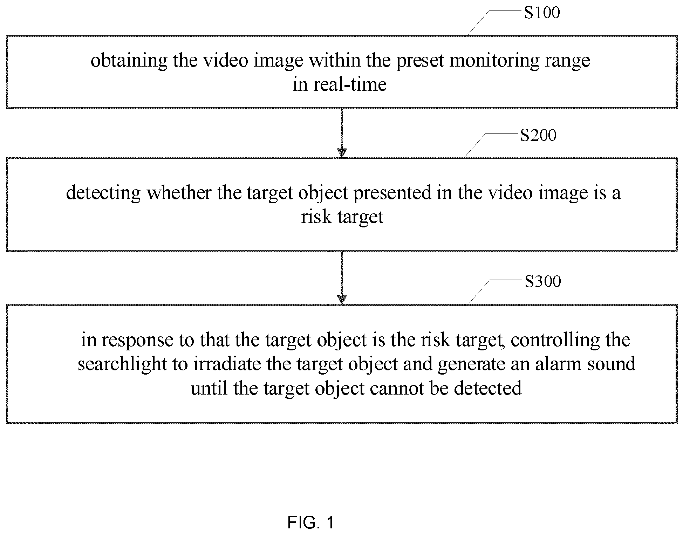

Based on this, the present application provides a monitoring method based on the AI PTZ searchlight, referring to FIG. 1, FIG. 1 is a flowchart of a monitoring method based on an AI pan-tilt-zoom (PTZ) searchlight according to an embodiment of the present application.

In this embodiment, the monitoring method based on the AI PTZ searchlight includes steps S100 to S300:
step S100, obtaining the video image within the preset monitoring range in real-time.

It should be noted that the preset monitoring range refers to a monitoring area that is determined and set in advance. This area is selected based on security considerations, monitoring requirements or other purposes, and the preset monitoring range can be fixed or an electronic fence set by software. The video image refers to a continuous image sequence captured by a monitoring camera, and these image sequences constitute the video streaming.

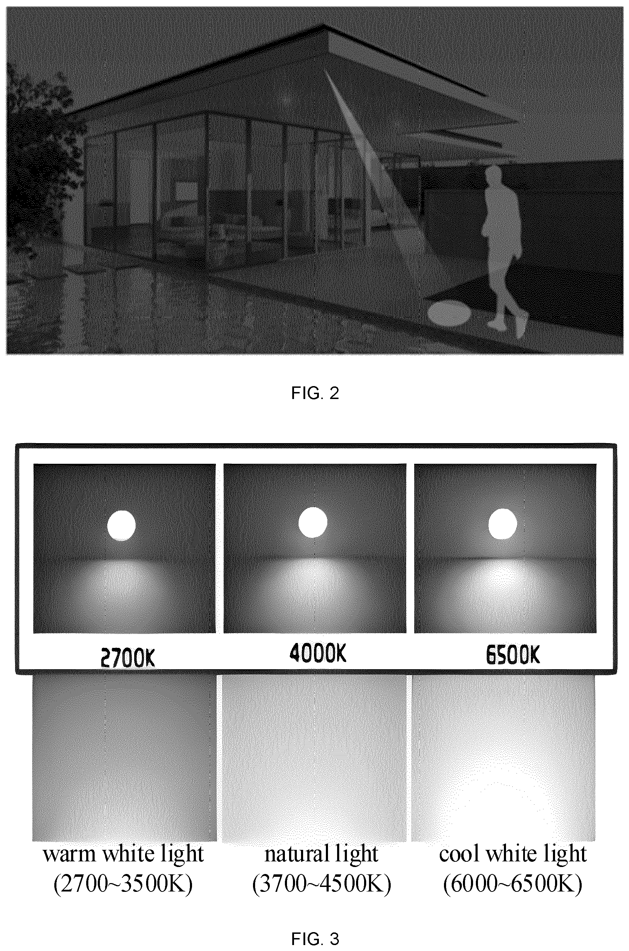

In an embodiment, the specific application scenario refers to FIG. 2. The monitoring method based on the AI PTZ searchlight is applied to a camera at the door of the user's residence. The apparatus can obtain the video image within the preset monitoring range in real-time, and instantly capture and process the situation within the monitoring range without significant delay, that is, the video streaming is continuous and as close to the actual time as possible. Specifically, the monitoring function of the apparatus is described above, that is, it can continuously capture and display real-time video images within a predefined monitoring area. The apparatus is specifically used in fields such as security monitoring and remote monitoring to ensure that any abnormal activities within the monitoring area can be discovered and responded to in time.

The monitoring method includes: step S200, detecting whether the target object presented in the video image is a risk target.

It should be noted that the target object refers to a specific target in the video, specifically a person or animal within the monitoring range; the risk target refers to an unauthorized intruder or a target with suspicious behavior.

In an embodiment, the apparatus detects whether the target object presented in the video image is a risk target. Specifically, the apparatus uses computer vision and deep learning algorithms to analyze the video streaming, automatically identify and position specific targets in the video, and conducts risk assessment on these targets.

Further, the step of detecting whether the target object presented in the video image is the risk target includes:
1. video capturing: obtaining the real-time video streaming through the camera.
2. video preprocessing: denoising, enhancing and decoding the video to obtain a clear and usable video image.
3. video segmentation: dividing the video into continuous frames of images and extracting relevant information.
4. video feature extraction: extracting key features in the video, such as people, vehicles, scenes, etc., through computer vision algorithms.
5. target detection and tracking: using target detection algorithms, such as you-only-look-once (YOLO)v8, etc., to identify and position specific targets in the video and track them between consecutive frames. This step may involve the use of deep learning models, such as the YOLO series of models, which can analyze video content in real-time, detect abnormal information, and thus predict risks and construct the intelligent monitoring apparatus.
6. behavior analysis: analyzing and classifying the target's behavior based on its trajectory and action, such as human activity detection, abnormal behavior identification, etc.
7. event identification and alarm: identifying specific events in the video, such as traffic accidents, thefts, etc., and issue alarm notifications in time. For example, the behavioral analysis can be used to understand and analyze people's behavior and activities, the sentiment analysis can be used to identify emotions and feelings, and the scene analysis can be used to understand and reason about scenes, thereby realizing the intelligent analysis and decision-making of the video data.
8. risk assessment: assessing whether there are risks or threats based on the detected targets and behavior analysis results. For example, in response to that an unauthorized intruder or suspicious behavior is detected, the device will trigger an alarm.

The monitoring method includes: step S300, in response to that the target object is the risk target, controlling the searchlight to irradiate the target object and generate an alarm sound until the target object cannot be detected.

It should be noted that the searchlight is a high-power lighting device that can generate a strong, concentrated beam of light to illuminate a distant object or area. The alarm sound can be a siren, a buzzer, or other preset sound modes to alert the risk target illegally entering the designated monitoring area.

In an embodiment, the apparatus analyzes the identified target object to determine whether it constitutes a security risk or threat. The risk target can be preset, such as an unauthorized person, a suspicious object, an abnormal behavior, etc. In response to determining that the target object is the risk target, the apparatus will automatically control the searchlight to irradiate the target object, that is, the apparatus uses strong light to irradiate the risk target, and the generated alarm sound is used to achieve the purpose of alerting and driving away the risk target, until the risk target disappears from the monitoring range, that is, the apparatus stops irradiating the light beam and generating the alarm sound after the target object cannot be detected.

In an embodiment, in response to detecting the risk target within the monitoring range, the camera device of the present application controls the searchlight to irradiate the target object and generate the alarm sound to achieve alerting and driving away the risk target, thereby improving the safety precaution effect of the camera and thus improving the user's experience.

In an embodiment, the step of controlling the searchlight to irradiate the target object and generate an alarm sound until the target object cannot be detected includes:
acquiring the dynamic motion trajectory of the target object; controlling the searchlight to irradiate the target object based on the dynamic motion trajectory while continuously generating the alarm sound, until the target object cannot be detected.

In an embodiment, in response to determining that the target object is the risk target, the apparatus captures the image in real-time through the video monitoring device, and identifies and tracks the target object in the image through computer vision technology. As the target object moves, the apparatus records its position change in the monitoring area, thereby acquiring the dynamic motion trajectory of the target object.

In an embodiment, after determining the dynamic motion trajectory of the target object, the apparatus triggers the alert mechanism and emits a continuous alarm sound. In addition, the apparatus adjusts the direction of the searchlight in real-time based on the acquired dynamic motion trajectory of the target object to ensure that the searchlight beam always irradiates on the target object. In response to that the target object is no longer detected, the apparatus automatically stops the alarm sound and the tracking irradiate of the searchlight and resumes the normal monitoring state. It can be understood that the purpose of this tracking irradiate is to keep the target object within the lighting range at all times, which is convenient for monitoring and driving away risk targets, that is, to further realize the alert and drive away the risk targets, so as to improve the safety precaution effect of the camera and thus enhance the user's experience.

In an embodiment, the step of acquiring the dynamic motion trajectory of the target object by the apparatus includes:
converting the video image into a plurality of image frames; detecting the feature data through a preset target tracking model based on the image frames to obtain a 3D detection box of the target object; tracking the target object based on the 3D detection box to obtain a target tracking result; predicting the position of the target object based on the target tracking result to obtain a prediction result; and generating the dynamic motion trajectory of the target object based on the target tracking result and the prediction result.

In an embodiment, firstly, the apparatus converts the video streaming into a series of image frames, the video is composed of continuous image frames, and each frame represents a moment of the video. Secondly, the apparatus uses the preset target tracking model to analyze each frame of the image to detect the target object in the image and extracting the feature data, and the detection process involves using a deep learning model, such as a convolutional neural network (CNN), to identify and position the target in the image.

Furthermore, the apparatus generates a 3D detection box based on the feature data of the detected target object. The 3D detection box includes not only the position of the target object in the two-dimensional image (x, y coordinates), but also the depth information of the object (z coordinate), so as to more accurately describe the position of the target object in the three-dimensional space. Secondly, the apparatus tracks the target object using a target tracking algorithm, such as a Kalman filter or a Mean-Shift algorithm. This involves matching and tracking the movement of the target object in consecutive image frames to obtain the position information of the target object over time.

In an embodiment, the apparatus predicts the position of the target object in the next few frames based on the target tracking result using a prediction algorithm. The prediction algorithm enables the apparatus to prepare and adjust the camera or other sensors in advance to continuously track fast-moving targets. Finally, the apparatus generates a dynamic motion trajectory of the target object by combining the target tracking result and the position prediction result. This trajectory can be two-dimensional (on the image plane) or three-dimensional (in the actual space), depending on the requirements of the application scenario.

In an embodiment, the process realizes the automatic detection, tracking and prediction of the target object in the video by the apparatus. In this way, the apparatus can monitor the behavior of the target object in real-time and make predictions about its future position and movement.

In an embodiment, in response to that the target object is the risk target, the step of controlling the searchlight to irradiate the target object and generate the alarm sound until the target object cannot be detected includes:
in response to that the target object is the risk target, determining the first color temperature information; and controlling the searchlight to irradiate the target object corresponding to the first color temperature information while generating the alarm sound, until the target object cannot be detected.

In an embodiment, after identifying the risk target, the apparatus determines the color temperature information corresponding to the risk situation. Referring to FIG. 3, the color temperature is a physical quantity that describes the color of the light source. Different color temperatures can produce different lighting effects. For example, a warmer color temperature (such as 3000K) can create a comfortable and warning atmosphere, while a colder color temperature (such as 5000K) gives people a clear and serious feeling.

In an embodiment, since the target object is a risk target, the apparatus uses cold color temperature or flashing lights to improve visibility and warning effects for the purpose of alerting and driving away risk targets. The high-brightness flashing light can also be used to effectively deter suspected targets.

It should be noted that the first color temperature information and the second color temperature information are light color temperatures in different scenarios. The first color temperature information scenario refers to a scenario where the target object is the risk target. Usually, a cold color temperature flashing light or a high-brightness flashing light is provided. The second color temperature information scenario refers to a scenario where the target object is not the risk target. Usually, a warm color temperature is used to welcome guests or help the target object illuminate the road in the dark.

In an embodiment, after identifying the risk target, the present application also provides a method of controlling the color temperature based on the light irradiation, further realizing the alert and driving away the risk target, so as to improve the safety precaution effect of the camera and thus improve the user's experience.

In the related art, the real-time image within the monitoring range is usually sent to the user side by the camera so that the user can view the monitoring image in real time, which has a poor effect in preventing strangers from intruding, that is, the safety precaution effect of the camera is low, which leads to a poor user's experience. In comparison, the present application obtains the video image within the preset monitoring range in real time, detects whether the target object presented in the video image is a risk target, and in response to that the target object is a risk target, controls the searchlight to irradiate the target object and generate an alarm sound until the target object cannot be detected. It can be understood that in response to detecting a risk target within the monitoring range, the camera device of the present application controls the searchlight to irradiate the target object and generate an alarm sound to alert and drive away the risk target, thereby improving the safety precaution effect of the camera and further enhancing the user's experience.

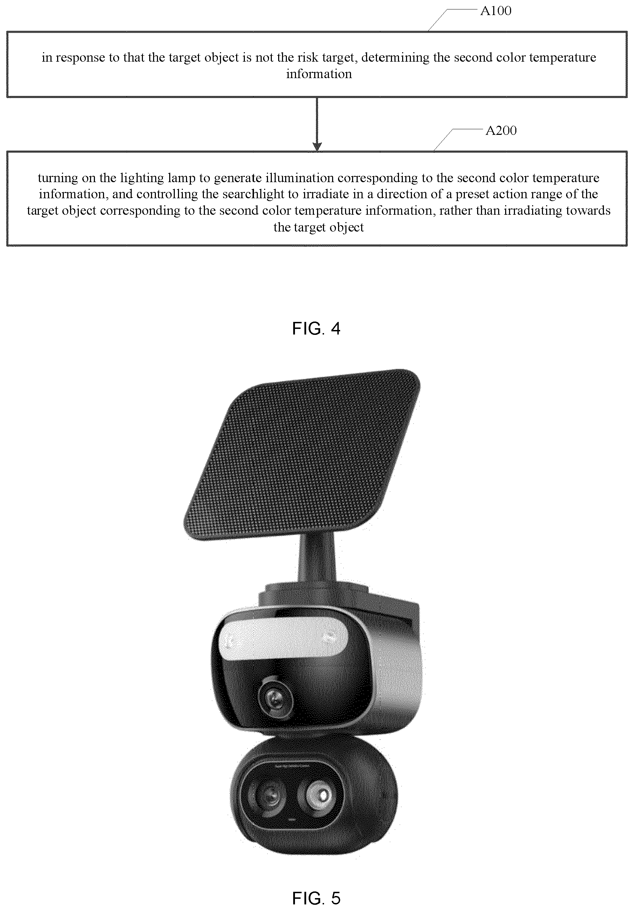

Referring to FIG. 4, in an embodiment, after the step of in response to that the target object is the risk target, controlling the searchlight to irradiate the target object and generate the alarm sound until the target object cannot be detected, the monitoring method based on the AI PTZ searchlight also includes:
step A100, in response to that the target object is not the risk target, determining the second color temperature information.

It should be noted that the first color temperature information and the second color temperature information are light color temperatures in different scenes.

The first color temperature information scene refers to a scene where the target object is a risk target, and usually a cold color temperature flashing light or a high-brightness flashing light is provided, while the second color temperature information scene refers to a scene where the target object is not a risk target, and usually a warm color temperature is used to welcome guests or help the target object illuminate the road in the dark.

The method includes:
step A200, turning on the lighting lamp to generate illumination corresponding to the second color temperature information, and controlling the searchlight to irradiate in a direction of a preset action range of the target object corresponding to the second color temperature information, rather than irradiating towards the target object.

In an embodiment, referring to FIG. 5, the lamp above the camera is a wide-range lighting lamp, and the lamp below the camera is a searchlight (tracking light). After the target object is determined not to be the risk target by the apparatus and the second color temperature information is determined, the lighting lamp is turned on to generate illumination corresponding to the second color temperature information, and the searchlight is controlled to irradiate in the direction of the preset action range of the target object corresponding to the second color temperature information, rather than irradiating towards the target object. The searchlight does not directly irradiate the target object, but is used to irradiate the preset action range of the target object, that is, the beam of the searchlight is directed to the area where the target object may move or enter, rather than directly irradiating on the target object.

It should be noted that the light beam of the searchlight is directed to the area where the target object may move or enter, rather than irradiating directly on the target object, so as to avoid strong light irradiating directly on the body or face of the legal user, while illuminating the possible path of action of the user. The lighting lamp can highlight the vicinity of the destination (i.e., the house), so that the legal user can comfortably see the road ahead, thereby improving the experience of the legal user.

In an embodiment, the step of controlling the searchlight to irradiate in the direction of the preset action range of the target object corresponding to the second color temperature information includes:
acquiring the dynamic motion trajectory of the target object; and controlling the searchlight to irradiate in the direction of the preset action range of the target object corresponding to the second color temperature information based on the dynamic motion trajectory.

In an embodiment, a video monitoring system is used by the apparatus to acquire the motion trajectory of the target object in the monitoring area, which usually involves video analysis techniques, such as target detection and tracking algorithms, to identify the target object and track the position of the target object in consecutive image frames, and the apparatus automatically controls the irradiating direction of the searchlight based on the acquired dynamic motion trajectory of the target object, so as to illuminate the preset action range where the target object may move, rather than irradiating directly on the target object.

Further, the searchlight can not only adjust the irradiating direction, but also adjust the color temperature of the irradiating light to meet specific monitoring requirements. Specifically, the irradiating direction of the searchlight is set to the preset action range of the target object, which means that the system can predict the possible movement path of the target object and illuminates the area in advance.

In an embodiment, the above process describes an automated monitoring system that can track the motion trajectory of the target object in real-time, and intelligently control the irradiating direction and the color temperature of the searchlight based on these information to improve monitoring efficiency and effectiveness.

In an embodiment, the step of determining the second color temperature information by the apparatus includes:
converting the video image into a plurality of image frames, and extracting environmental characteristics from the plurality of image frames; and performing color temperature adaptation analysis through a preset color temperature control model based on the environmental characteristics, so as to obtain the second color temperature information. The color temperature control model is obtained by training a preset to-be-trained model based on an environmental characteristics sample and a color temperature information tag of the environmental characteristics sample.

In an embodiment, firstly, the apparatus converts the video streaming into a series of image frames, which is achieved through video processing technology, and each frame represents a moment of the video, providing basic data for subsequent processing. Secondly, the apparatus extracts environmental characteristics from these image frames. The environmental characteristics may include objects in the scene, light conditions, color distribution, etc., and these characteristics facilitates the apparatus understanding the current environmental conditions.

Further, based on the extracted environmental characteristics, the apparatus performs color temperature adaptation analysis through a preset color temperature control model. The model may be trained based on the previously collected environmental characteristics sample and corresponding color temperature information tag, and can determine the most suitable color temperature based on the current environmental characteristics. The result of the color temperature adaptation analysis is the determined "second color temperature information", which is the best color temperature value calculated by the apparatus based on the current environmental characteristics and preset model.

In an embodiment, the apparatus can automatically adjust the color temperature of the lighting based on the real-time video image and environmental characteristics, and intelligently control the irradiating direction of the searchlight to adapt to the needs of the monitoring scene, thereby improving the user's experience.

It should be noted that the above examples are only used to understand the present application, and do not constitute a limitation on the monitoring method based on the AI PTZ searchlight in the present application. More forms of simple transformation based on this technical concept are all within the scope of the present application.

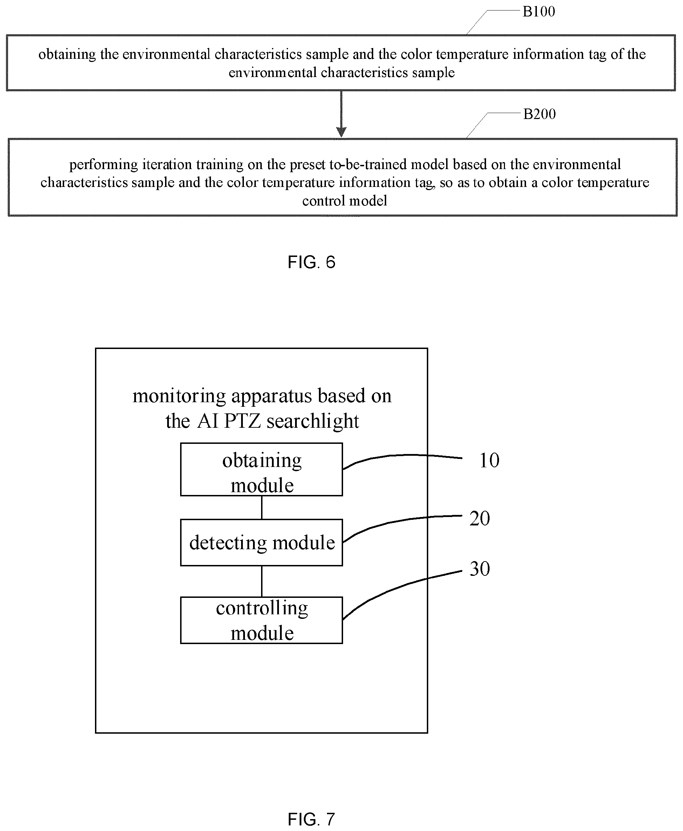

Referring to FIG. 6, before the step of converting the video image into the plurality of image frames and extracting environmental characteristics from the image frames, the monitoring method based on the AI PTZ searchlight also includes:
step B100, obtaining the environmental characteristics sample and the color temperature information tag of the environmental characteristics sample.

It should be noted that firstly, the apparatus obtains the environmental characteristics sample involves using the camera, the sensor or other data acquiring devices to collect the image or video data under different environmental conditions. These data will serve as the basis for analysis and for subsequent model training. The environmental characteristics sample may include various visual elements, such as the shape, size, color, texture of the object, as well as the lighting conditions, background noise, etc. of the scene.

Furthermore, for each collected environmental characteristics sample, it is also necessary to obtain the corresponding color temperature information tag. The color temperature is a physical quantity that describes the color of the light source, usually expressed in Kelvin (K). The color temperature information tag can be manually labeled or automatically measured by a device such as a color temperature meter. These tags describe the lighting conditions of the sample under a specific color temperature.

The method includes:
step B200, performing iteration training on the preset to-be-trained model based on the environmental characteristics sample and the color temperature information tag, so as to obtain a color temperature control model.

In an embodiment, the apparatus first selects or designs a preset model structure, which can accept the input environmental characteristics sample and output the corresponding color temperature prediction. This model is untrained before starting training, or "to be trained", and parameters of which have not been adjusted to the optimal state, that is, the model is to-be-trained.

In an embodiment, the apparatus uses the collected environmental characteristics sample and color temperature information tag to train the model. The training process usually includes the following steps:
forward propagation: inputting the sample data and calculating by the model to obtain the prediction output;
loss calculation: comparing the prediction output of the model with the actual color temperature information tag, and calculating the loss function to evaluate the prediction accuracy of the model;
backward propagation: calculating the gradient of parameters of the model based on the loss function to determine how to adjust the parameters to reduce the loss; and
parameter update: using optimization algorithms (such as gradient descent) to update the parameters of the model.

This process will be iterated multiple times, and each iteration aims to improve the performance of the model until the model reaches a satisfactory accuracy on the given data set.

In an embodiment, after multiple iterations of training, the parameters of the model are adjusted to a better state. At this time, the model can accurately predict the appropriate color temperature based on the input environmental characteristics sample. The model completed by this training is called the color temperature control model, which can be used in practical applications to automatically adjust the color temperature of the light source based on the real-time environmental characteristics.

It can be understood that the above process describes how to train a model that can predict color temperature using the environmental characteristics sample data with tags through machine learning methods. This model can automatically adjust the color temperature of the light source under different environmental conditions to adapt to the comfort of the human eye or specific application requirements.

In an embodiment, the step of performing iteration training on the preset to-be-trained model based on the environmental characteristics sample and the color temperature information tag, so as to obtain a color temperature control model includes:
determining the time information of the environmental characteristics sample; determining the corresponding time weight based on the time information; and performing iteration training on the preset to-be-trained model based on the environmental characteristics sample, the color temperature information tag and the time weight to obtain a color temperature control model.

In an embodiment, the present application further provides that the apparatus can record the time information of each sample in response to collecting environmental characteristics samples, including the specific date, time, season, and even a specific time period (such as morning, noon, and evening) in response to that the sample is acquired.

In an embodiment, the apparatus assigns a time weight to each sample based on the time information of the sample. The weight reflects the degree of influence of the time factor on the model prediction. For example, in response to that the environmental characteristics of a certain period have a greater impact on the color temperature, the sample of this period may be assigned with a higher time weight.

In an embodiment, the same environmental characteristics information will have different effects in different time periods, so that the feature weight of the same feature information will also be different in different time periods. Therefore, it is necessary to introduce the time weight to improve the accuracy of model analysis. For example, when the legal user is monitored is summer from May to July, and the emitted light beam is warm, it will enhance the user's feeling of heat, making people feel more dry and hot, thus generating boredom, and reducing user's experience. Therefore, in the above case, when the season is summer from May to July, the weight of warm tones will be reduced and the weight of cold tones will be increased. Correspondingly, in winter from September to December, the weight of cold tones will be reduced and the weight of warm tones will be increased.

In an embodiment, the step of performing iteration training on the preset to-be-trained model based on the environmental characteristics sample, the color temperature information tag and the time weight to obtain the color temperature control model includes:
performing the color temperature adaptation analysis through the preset to-be-trained model based on the environmental characteristics sample and the time weight, so as to obtain a color temperature output result; calculating a difference between the color temperature output result and the color temperature information tag to obtain an error result; determining whether the error result meets the error standard indicated by the preset error threshold range based on the error result; in response to that the error result does not meet the error standard indicated by the preset error threshold range, returning to the step of performing the color temperature adaptation analysis through the preset to-be-trained model based on the environmental characteristics sample and the time weight, so as to obtain a color temperature output result, and stopping training until the error result meets the error standard indicated by the preset error threshold range; and obtaining the color temperature control model.

It should be noted that, the apparatus performs color temperature adaptation analysis based on the environmental characteristics sample and the time weight through the preset to-be-trained model to obtain a color temperature output result. Specifically, the apparatus uses the preset to-be-trained model, combined with the environmental characteristics sample and the corresponding time weight, to perform color temperature adaptation analysis. During the process, the model learns how to predict the appropriate color temperature based on the input environmental characteristics and time information. After the model analysis, a color temperature prediction result is output. This result is based on the current learning state of the model and the input data.

It can be understood that the apparatus then performs a difference calculation between the color temperature output result and the color temperature information tag to obtain an error result, that is, to verify whether the result obtained by the model in the training is consistent with the known result, and performs a difference calculation between the results to obtain an error result.

It should be noted that the apparatus determines whether the error result meets the error standard indicated by the preset error threshold range based on the error result. Specifically, since there is an error between the result after the model training and the actual result, the error result is allowed to be within the preset error threshold range, so as to further determine whether the error result meets the error standard indicated by the preset error threshold range.

It can be understood that in response to that the error result does not meet the error standard indicated by the preset error threshold range, it means that the error in this training is too large, and the apparatus returns the step of performing color temperature adaptation analysis based on the environmental characteristics sample and the time weight through the preset to-be-trained model to obtain the color temperature output result, that is, performing iteration training until the error result meets the error standard indicated by the preset error threshold range, and stopping training to obtain the color temperature control model. The above iteration process ensures that the final color temperature control model can provide accurate color temperature prediction in practical applications.

It should be noted that the above examples are only used to understand the present application and do not constitute a limitation on the monitoring method based on the AI PTZ searchlight in the present application. Simple transformations in more forms based on this technical concept are all within the scope of the present application.

The present application also provides a monitoring apparatus based on the PTZ searchlight. Referring to FIG. 7, the monitoring apparatus based on the PTZ searchlight includes:
an obtaining module 10 configured to obtain the video image within the preset monitoring range in real-time;
a detecting module 20 configured to determine whether the target object presented in the video image is a risk target; and
a controlling module 30 configured to control the searchlight to irradiate the target object and generate an alarm sound in response to that the target object is the risk target, until the target object cannot be detected.

In an embodiment, the control module 30 includes:
a first acquisition module configured to acquire the dynamic motion trajectory of the target object; and
an irradiating module configured to control the searchlight to irradiate the target object based on the dynamic motion trajectory while continuously generating the alarm sound, until the target object cannot be detected.

In an embodiment, the first acquisition module includes:
a first conversion module configured to convert the video image into a plurality of image frames;
a target detection module configured to determine feature data based on the image frame through a preset target tracking model to obtain a 3D detection box of the target object;
a tracking module configured to track the target object based on the 3D detection box to obtain a target tracking result, and predicting the position of the target object based on the target tracking result to obtain a prediction result;
a generation module configured to generate a dynamic motion trajectory of the target object based on the target tracking result and the prediction result.

In an embodiment, the control module 30 also includes:
a determination module configured to determine the first color temperature information in response to that the target object is the risk target; and
a first irradiating module configured to control the searchlight to irradiate the target object corresponding to the first color temperature information while generating the alarm sound until the target object cannot be detected.

In an embodiment, the monitoring apparatus based on the AI PTZ searchlight further includes:
a color temperature determination module configured to determine the second color temperature information in response to that the target object is not the risk target; and
a searchlight control module configured to turn on the lighting lamp to generate illumination corresponding to the second color temperature information, and controlling the searchlight to irradiate in the direction of the preset action range of the target object corresponding to the second color temperature information, rather than irradiating towards the target object.

In an embodiment, the searchlight control module includes:
a second acquisition module configured to acquire the dynamic motion trajectory of the target object; and
a second irradiating module configured to control the searchlight to irradiate in the direction of the preset action range of the target object corresponding to the second color temperature information based on the dynamic motion trajectory.

In an embodiment, the color temperature determination module includes:
an environmental characteristics extracting module configured to convert the video image into a plurality of image frames and extract environmental characteristics from the image frames; and
an analysis module configured to perform color temperature adaptation analysis based on the environmental characteristics through the preset color temperature control model to obtain the second color temperature information. The color temperature control model is obtained by training the preset to-be-trained model based on the environmental characteristics sample and the color temperature information tag of the environmental characteristics sample.

In an embodiment, the monitoring apparatus based on the AI PTZ searchlight also includes:
a sample obtaining module configured to obtain environmental characteristics sample and the color temperature information tag of the environmental characteristics sample; and
a training module configured to perform iteration training on the preset to-be-trained model based on the environmental characteristics sample and the color temperature information tag to obtain the color temperature control model.

In an embodiment, the training module includes:
a time information determination module configured to determine the time information of the environmental characteristics sample;
a time weight determination module configured to determine the corresponding time weight based on the time information; and
a color temperature control model training module configured to perform iteration training on the preset to-be-trained model based on the environmental characteristics sample, the color temperature information tag and the time weight to obtain a color temperature control model.

In an embodiment, the color temperature control model training module includes:
a color temperature adaptation analysis module configured to perform color temperature adaptation analysis based on the environmental characteristics sample and the time weight through the preset to-be-trained model to obtain the color temperature output result;
a difference calculation module configured to perform difference calculation between the color temperature output result and the color temperature information tag to obtain an error result;
a determining module configured to determine whether the error result meets the error standard indicated by the preset error threshold range based on the error result; and
an iteration training module configured to return to the step of performing the color temperature adaptation analysis based on the environmental characteristics sample and the time weight through the preset to-be-trained model to obtain the color temperature output result in response to that the error result does not meet the error standard indicated by the preset error threshold range, and configured to stop training until the error result meets the error standard indicated by the preset error threshold range to obtain the color temperature control model.

The monitoring apparatus based on the PTZ searchlight provided in the present application adopts the monitoring method based on the AI PTZ searchlight in the above embodiment, which can solve the technical problems of monitoring based on the PTZ searchlight. Compared with the prior art, the beneficial effects of the monitoring apparatus based on the PTZ searchlight provided in the present application are the same as the beneficial effects of the monitoring method based on the AI PTZ searchlight provided in the above embodiment, and other technical features in the monitoring apparatus based on the PTZ searchlight are the same as the features disclosed in the above embodiment method, which are not repeated here.

The present application provides a monitoring device based on the PTZ searchlight, and the monitoring device based on the PTZ searchlight includes at least one processor and a memory communicated with the processor. The memory stores instructions that can be executed by at least one processor, and the instructions are executed by at least one processor, so that at least one processor can execute the monitoring method based on the AI PTZ searchlight in the above embodiments.

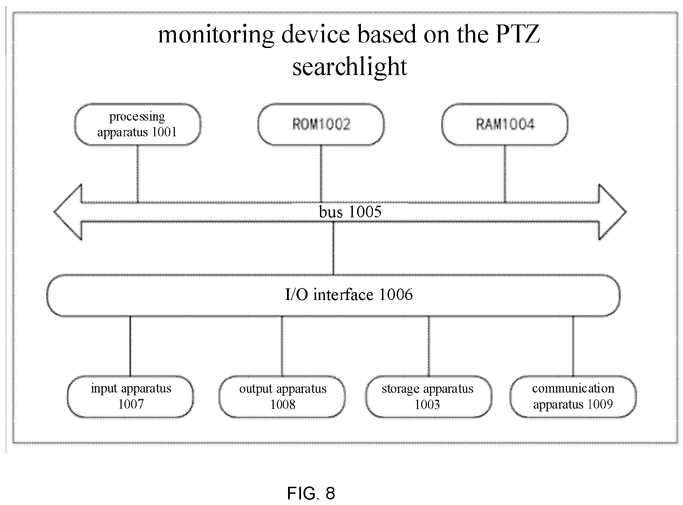

Referring to FIG. 8, which shows a schematic structural view of a monitoring device based on the PTZ searchlight suitable for implementing embodiments of the present application. The monitoring device based on the PTZ searchlight in the embodiment of the present application may include but is not limited to mobile terminals such as mobile phones, laptop computers, digital broadcast receivers, personal digital assistants (PDA), portable application descriptions (PAD), vehicle-mounted terminals (such as vehicle-mounted navigation terminals), etc., and fixed terminals such as digital TVs, desktop computers, etc. The monitoring device based on the PTZ searchlight shown in FIG. 8 is only an example and should not bring any limitation to the functions and scope of the present application.

As shown in FIG. 8, the monitoring device based on the PTZ searchlight may include a processing apparatus 1001 (such as a central processor, a graphics processor, etc.), which may perform various appropriate actions and processes based on a program stored in a read-only memory (ROM) 1002 or a program loaded from a storage apparatus 1003 to a random access memory (RAM) 1004. In RAM 1004, various programs and data required for the operation of monitoring device based on the PTZ searchlight are also stored. The processing apparatus 1001, the ROM 1002, and the RAM 1004 are communicated with each other through a bus 1005. An input/output (I/O) interface 1006 is also communicated with the bus. Generally, the following systems can be communicated with the I/O interface 1006: an input apparatus 1007 including, for example, a touch screen, a touch pad, a keyboard, a mouse, an image sensor, a microphone, an accelerometer, a gyroscope, etc.; an output apparatus 1008 including, for example, a liquid crystal display (LCD), a speaker, a vibrator, etc.; a storage apparatus 1003 including, for example, a magnetic tape, a hard disk, etc.; and a communication apparatus 1009. The communication apparatus 1009 allows the monitoring device based on the PTZ searchlight to communicate with other devices through wire or wireless to exchange data. Although the monitoring device based on the PTZ searchlight with various systems is shown in the figure, it should be understood that it is not required to implement or have all the systems shown. More or fewer systems may be implemented or provided alternatively.

In particular, according to the embodiments disclosed in the present application, the process described above with reference to the flowchart may be implemented as a computer software program. For example, the embodiments disclosed in the present application include a computer program product, which includes a computer program carried on a computer-readable medium, and the computer program includes program code for executing the method shown in the flowchart. In this way, the computer program may be downloaded and installed from a network through a communication apparatus, or installed from a storage apparatus 1003, or installed from a ROM 1002. In response to that the computer program is executed by the processing apparatus 1001, the above functions defined in the method of the embodiments disclosed in the present application are executed.

The monitoring device based on the PTZ searchlight provided in the present application adopts the monitoring method based on the AI PTZ searchlight in the above embodiment, which can solve the technical problem of monitoring based on the PTZ searchlight. Compared with the prior art, the beneficial effects of the monitoring device based on the PTZ searchlight provided in the present application are the same as the beneficial effects of the monitoring method based on the AI PTZ searchlight provided in the above-mentioned embodiment, and other technical features in the monitoring device based on the PTZ searchlight are the same as the features disclosed in the method of the previous embodiment, which will not be repeated here.

It should be understood that the various parts disclosed in the present application can be implemented by hardware, software, firmware or a combination thereof. In the description of the above embodiments, specific features, structures, materials or characteristics can be combined in any one or more embodiments or examples in a suitable manner.

The above is only a specific embodiment of the present application, but the scope of the present application is not limited thereto. For those skilled in the art, any changes or replacements within the technical scope disclosed in the present application should be covered within the scope of the present application. Therefore, the scope of the present application shall be subject to the scope of the claims.

The present application provides a computer-readable storage medium provided with computer-readable program instructions (i.e., computer programs) stored thereon, and the computer-readable program instructions are used to execute the monitoring method based on the AI PTZ searchlight in the above embodiments.

The computer-readable storage medium provided in the present application can be, for example, a USB flash drive, but is not limited to electrical, magnetic, optical, electromagnetic, infrared, or semiconductor systems or devices, or any combination thereof. More specific examples of computer-readable storage media may include, but are not limited to, electrical connections with one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above. In this embodiment, the computer-readable storage medium may be any tangible medium containing or storing a program that may be used by or in conjunction with an instruction execution system or device. The program code contained on the computer-readable storage medium may be transmitted using any appropriate medium, including but not limited to: wires, optical cables, radio frequency (RF), etc., or any suitable combination of the above.

The above-mentioned computer-readable storage medium may be included in the monitoring device based on the PTZ searchlight, or may exist separately without being assembled into the monitoring device based on the PTZ searchlight.

The computer-readable storage medium carries one or more programs, and in response to that the one or more programs are executed by the monitoring device based on the PTZ searchlight, the monitoring device based on the PTZ searchlight can achieve monitoring based on the PTZ searchlight.

The computer program code for performing the operation of the present application can be written in one or more programming languages or a combination thereof, and the programming languages include object-oriented programming languages such as Java, Smalltalk, C++, and conventional procedural programming languages such as "C" language or similar programming languages. The program code can be executed entirely on the user's computer, partially on the user's computer, as a separate software package, partially on the user's computer and partially on a remote computer, or entirely on a remote computer or server. In the case of the remote computer, the remote computer can be communicated with the user's computer through any type of network, including a local area network (LAN) or a wide area network (WAN), or can be communicated with an external computer (for example, through the Internet by an Internet service provider).

The flowcharts and block views in the accompanying drawings illustrate the possible architecture, functions and operations of the systems, methods and computer program products according to various embodiments of the present application. In this regard, each box in the flowchart or block view may represent a module, a program segment, or a portion of a code, which contains one or more executable instructions for implementing the specified logical functions. It should also be noted that in some embodiments, the functions marked in the box may also occur in a different order than that marked in the accompanying drawings. For example, two boxes represented in succession can actually be executed substantially in parallel, and they can sometimes be executed in the opposite order, depending on the functions involved. It should also be noted that each box in the block view and/or the flowchart, and the combination of boxes in the block view and/or the flowchart, can be implemented by a dedicated hardware-based system that performs the specified functions or operations, or can be implemented by a combination of dedicated hardware and computer instructions.

The module involved in the embodiments described in the present application can be implemented by software or by hardware. The name of the module does not constitute a limitation on the unit itself in some cases.

The readable storage medium provided in the present application is a computer-readable storage medium, which stores computer-readable program instructions (i.e., computer programs) for executing the above-mentioned monitoring method based on the AI PTZ searchlight, and can solve the technical problem of monitoring based on the PTZ searchlight. Compared with the prior art, the beneficial effects of the computer-readable storage medium provided in the present application are the same as the beneficial effects of the monitoring method based on the AI PTZ searchlight provided in the above-mentioned embodiment, which will not be repeated here.

The present application also provides a computer program product, including a computer program, which implements the steps of the monitoring method based on the AI PTZ searchlight as described above when executed by the processor.

The computer program product provided in the present application can solve the technical problem of monitoring based on the PTZ searchlight. Compared with the prior art, the beneficial effects of the computer program product provided in the present application are the same as the beneficial effects of the monitoring method based on the AI PTZ searchlight provided in the above-mentioned embodiment, which will not be repeated here.

The above descriptions are only some embodiments of the present application, and are not intended to limit the scope of the present application. All equivalent structural changes made using the contents of specification and drawings of the present application under the concept of the present application, or direct/indirect applications in other related technical fields are included in the scope of the present application.

## Claims

1. A monitoring method based on an AI pan-tilt-zoom (PTZ) searchlight, **characterized by** comprising:
obtaining a video image within a preset monitoring range in real-time;
detecting whether a target object presented in the video image is a risk target; and
in response to that the target object is the risk target, controlling a searchlight to irradiate the target object and generate an alarm sound until the target object is not detected.

2. The monitoring method based on the AI PTZ searchlight according to claim 1, wherein the step of controlling the searchlight to irradiate the target object and generate the alarm sound until the target object is not detected comprises:
acquiring a dynamic motion trajectory of the target object; and
controlling the searchlight to irradiate the target object based on the dynamic motion trajectory while continuously generating the alarm sound, until the target object is not detected.

3. The monitoring method based on the AI PTZ searchlight according to claim 2, wherein the step of acquiring the dynamic motion trajectory of the target object comprises:
converting the video image into a plurality of image frames;
detecting a feature data through a preset target tracking model based on the plurality of image frames to obtain a 3D detection box of the target object;
tracking the target object based on the 3D detection box to obtain a target tracking result, and predicting a position of the target object based on the target tracking result to obtain a prediction result; and
generating the dynamic motion trajectory of the target object based on the target tracking result and the prediction result.

4. The monitoring method based on the AI PTZ searchlight according to claim 1, wherein the step of in response to that the target object is the risk target, controlling the searchlight to irradiate the target object and generating the alarm sound until the target object is not detected comprises:
in response to that the target object is the risk target, determining a first color temperature information; and
controlling the searchlight to irradiate the target object corresponding to the first color temperature information while generating the alarm sound, until the target object is not detected.

5. The monitoring method based on the AI PTZ searchlight according to claim 1, wherein after the step of in response to that the target object is the risk target, controlling the searchlight to irradiate the target object and generate the alarm sound until the target object is not detected, the method comprises:
in response to that the target object is not the risk target, determining a second color temperature information; and
turning on a lighting lamp to generate illumination corresponding to the second color temperature information, and controlling the searchlight to irradiate in a direction of a preset action range of the target object corresponding to the second color temperature information, rather than irradiating towards the target object.

6. The monitoring method based on the AI PTZ searchlight according to claim 5, wherein the step of controlling the searchlight to irradiate in the direction of the preset action range of the target object corresponding to the second color temperature information comprises:
acquiring a dynamic motion trajectory of the target object; and
controlling the searchlight to irradiate in the direction of the preset action range of the target object corresponding to the second color temperature information based on the dynamic motion trajectory.

7. The monitoring method based on the AI PTZ searchlight according to claim 5, wherein the step of determining the second color temperature information comprises:
converting the video image into a plurality of image frames and extracting environmental characteristics from the plurality of image frames; and
performing a color temperature adaptation analysis based on the environmental characteristics through a preset color temperature control model to obtain the second color temperature information, wherein the color temperature control model is obtained by training a preset to-be-trained model based on an environmental characteristics sample and a color temperature information tag of the environmental characteristics sample.

8. The monitoring method based on the AI PTZ searchlight according to claim 7, wherein before the step of converting the video image into the plurality of image frames and extracting environmental characteristics from the plurality of image frames, the method comprises:
obtaining the environmental characteristics sample and the color temperature information tag of the environmental characteristics sample; and
performing iteration training on the preset to-be-trained model based on the environmental characteristics sample and the color temperature information tag to obtain the color temperature control model.

9. The monitoring method based on the AI PTZ searchlight according to claim 8, wherein the step of performing iteration training on the preset to-be-trained model based on the environmental characteristics sample and the color temperature information tag to obtain the color temperature control model comprises:
determining a time information of the environmental characteristics sample;
determining a corresponding time weight based on the time information; and
performing iteration training on the preset to-be-trained model based on the environmental characteristics sample, the color temperature information tag and the time weight to obtain the color temperature control model.

10. The monitoring method based on the AI PTZ searchlight according to claim 9, wherein the step of performing iteration training on the preset to-be-trained model based on the environmental characteristics sample, the color temperature information tag and the time weight to obtain the color temperature control model comprises:
performing the color temperature adaptation analysis through the preset to-be-trained model based on the environmental characteristics sample and the time weight, so as to obtain a color temperature output result;
calculating a difference between the color temperature output result and the color temperature information tag to obtain an error result;
determining whether the error result meets an error standard indicated by a preset error threshold range based on the error result; and
in response to that the error result does not meet the error standard indicated by the preset error threshold range, returning to the step of performing the color temperature adaptation analysis through the preset to-be-trained model based on the environmental characteristics sample and the time weight, so as to obtain the color temperature output result, and stopping training until the error result meets the error standard indicated by the preset error threshold range to obtain the color temperature control model.

11. A monitoring apparatus based on a pan-tilt-zoom (PTZ) searchlight, **characterized by** comprising:
an obtaining module configured to obtain a video image within a preset monitoring range in real-time;
a detecting module configured to determine whether a target object presented in the video image is a risk target; and
a controlling module configured to control a searchlight to irradiate the target object and generate an alarm sound in response to that the target object is the risk target, until the target object is not detected.

12. The monitoring apparatus based on the AI PTZ searchlight according to claim 11, wherein the control module comprises:
a first acquisition module configured to acquire a dynamic motion trajectory of the target object; and
an irradiating module configured to control the searchlight to irradiate the target object based on the dynamic motion trajectory while continuously generating the alarm sound, until the target object is not detected.

13. The monitoring apparatus based on the AI PTZ searchlight according to claim 12, wherein the first acquisition module comprises:
a first conversion module configured to convert the video image into a plurality of image frames;
a target detection module configured to determine a feature data based on the image frame through a preset target tracking model to obtain a 3D detection box of the target object;
a tracking module configured to track the target object based on the 3D detection box to obtain a target tracking result, and predicting a position of the target object based on the target tracking result to obtain a prediction result; and
a generation module configured to generate a dynamic motion trajectory of the target object based on the target tracking result and the prediction result.

14. The monitoring apparatus based on the AI PTZ searchlight according to claim 11, wherein the control module further comprises:
a determination module configured to determine a first color temperature information in response to that the target object is the risk target; and
a first irradiating module configured to control the searchlight to irradiate the target object corresponding to the first color temperature information while generating the alarm sound until the target object is not detected.

15. The monitoring apparatus based on the AI PTZ searchlight according to claim 11, further comprising:
a color temperature determination module configured to determine a second color temperature information in response to that the target object is not the risk target; and
a searchlight control module configured to turn on a lighting lamp to generate illumination corresponding to the second color temperature information, and controlling the searchlight to irradiate in a direction of the preset action range of the target object corresponding to the second color temperature information, rather than irradiating towards the target object.

16. The monitoring apparatus based on the AI PTZ searchlight according to claim 15, wherein the searchlight control module comprises:
a second acquisition module configured to acquire the dynamic motion trajectory of the target object; and
a second irradiating module configured to control the searchlight to irradiate the target object in the direction of the preset action range based on the dynamic motion trajectory.

17. The monitoring apparatus based on the AI PTZ searchlight according to claim 15, wherein the color temperature determination module comprises:
an environmental characteristics extracting module configured to convert the video image into a plurality of image frames and extracting environmental characteristics from the plurality of image frames; and
an analysis module configured to perform a color temperature adaptation analysis based on the environmental characteristics through a preset color temperature control model to obtain the second color temperature information, wherein the color temperature control model is obtained by training a preset to-be-trained model based on an environmental characteristics sample and a color temperature information tag of the environmental characteristics sample.

18. A monitoring device based on the PTZ searchlight, **characterized by** comprising: a memory, a processor, and a computer program stored in the memory and executable on the processor, wherein the computer program is configured to implement steps of the monitoring method based on the AI PTZ searchlight according to any one of claims 1 to 10.

19. A storage medium, **characterized in that** the storage medium is a computer-readable storage medium, a computer program is stored on the storage medium, and the steps of the monitoring method based on the AI PTZ searchlight according to any one of claims 1 to 10 are implemented when the computer program is executed by the processor.

20. A computer program product, **characterized by** comprising a computer program, and steps of the monitoring method based on the AI PTZ searchlight according to any one of claims 1 to 10 are implemented when the computer program is executed by the processor.
